# EUROPÄISCHE PATENTSCHRIFT

(11) **EP 1 478 070 B1**
(45) Veröffentlichungstag und Bekanntmachung des Hinweises auf die Patenterteilung: **30.06.2010**
(21) Anmeldenummer: 03010907.8
(22) Anmeldetag: 15.05.2003
(51) Int. Cl.: H02H 3/33

(54) **Allstromsensitive Fehlerstrom-Schutzeinrichtung**
All fault-current sensitive protection device
Dispositif de protection sensible à tout courant de défaut

(43) Veröffentlichungstag der Anmeldung: 17.11.2004
(73) Patentinhaber: SIEMENS AKTIENGESELLSCHAFT, 80333 München (DE)
(72) Erfinder: Bauer, Bernhard, 93080 Pentling (DE); Huber, Markus, 93083 Obertraubling (DE); Schmid, Reinhard, 93051 Regensburg (DE)

(56) Entgegenhaltungen:
- EP-A- 0 866 536
- EP-A- 1 011 183
- WO-A-01/20741
- WO-A-86/06222
- DE-A- 19 735 412
- SOLLEDER R: "ALLSTROMSENSITIVE FEHLERSTROM-SCHUTZEINRICHTUNG FUER INDUSTRIEANWENDUNG" ELEKTROTECHNISCHE ZEITSCHRIFT - ETZ, VDE VERLAG GMBH. BERLIN, DE, Bd. 115, Nr. 16, 1. August 1994 (1994-08-01), Seiten 896-898,900-901, XP000471380 ISSN: 0948-7387

## Beschreibung

Die Erfindung betrifft eine allstrom-sensitive Fehlerstrom-Schutzeinrichtung mit einer ersten, netzspannungsunabhängigen Sensoreinrichtung und einer zweiten, netzspannungsabhängigen Sensoreinrichtung.

Bei einem Schutzschalter unterscheidet man zwischen einem netzspannungsunabhängigen Fehlerstrom-Schutzschalter (FI-Schutzschalter) und einem netzspannungsabhängigen Differenzstrom-Schutzschalter (DI-Schutzschalter). Die beiden Schutzschalter weisen jeweils einen Summenstromwandler auf, durch den die Leiter des zu überwachenden Leitungsnetzes geführt sind. Beide Summenstromwandler weisen jeweils einen Kern mit einer Wicklung auf, an die eine Sensoreinrichtung angeschlossen ist, welche wiederum mit einer Auslöseeinrichtung verbunden ist. Tritt im Leitungsnetz ein unzulässiger Fehlerstrom auf, so wird dieser vom Summenstromwandler von der zugehörigen Sensoreinrichtung erfasst. Über die Auslöseeinrichtung werden die Leiter des Leitungsnetzes getrennt.

Durch eine Kombination eines pulsstromsensitiven FI-Schutzschalters und eines gleichstromsensitiven DI-Schutzschalters erhält man eine so genannte allstromsensitive Fehlerstromschutzeinrichtung, welche in allen Versorgungsspannungsfällen die Schutzfunktion aufrecht erhält. Eine derartige Fehlerstrom-Schutzeinrichtung ist beispielsweise aus der DE 197 35 412 A1 bekannt.

Die bekannte allstromsensitive Fehlerstrom-Schutzeinrichtung wird in elektrischen Anlagen zum Personen- und Anlagenschutz eingesetzt.

Beim Fehlerstrom unterscheidet man zwischen einem glatten Gleichfehlerstrom und einem pulsierenden Gleichfehlerstrom sowie einem Wechselfehlerstrom.

Beim Auftreten eines pulsierenden Gleichfehlerstromes oder eines Wechselfehlerstromes wird in der Wicklung des betreffenden Summenstromwandlers eine Spannung induziert, die durch die zugehörige Sensoreinrichtung ausgewertet wird. Zur Erfassung der beiden Stromarten kann also die magnetische Induktion herangezogen werden (pulsstromsensitives Erfassungsprinzip).

Beim Auftreten eines glatten Gleichfehlerstromes ist dieses Messprinzip nicht anwendbar, da sich der magnetische Fluss durch die Wicklung des betreffenden Summenstromwandlers nicht ändert und damit keine Spannung induziert wird. Zur Erfassung eines glatten Gleichfehlerstromes wird daher nach einem anderen Prinzip verfahren und zwar wird die Wicklung des Summenstromwandlers mit einer Wechselspannung beaufschlagt, so dass der Kern des Summenstromwandlers wechselweise magnetisiert wird. Der Kern des Summenstromwandlers wird also durch die Wechselspannung ausgesteuert. Tritt nun ein Gleichfehlerstrom auf, so verschiebt sich die Magnetisierung des Kerns, welche letztendlich von der Auswerteeinheit erfasst wird (gleichstromsensitives Erfassungsprinzip).

Zur Erfassung eines glatten Gleichfehlerstromes und eines pulsierenden Gleichfehlerstromes bzw. Wechselfehlerstromes werden bei der allstromsensitiven Fehlerstrom-Schutzeinrichtung gemäß der DE 197 35 412 A1 die beiden vorgenannten unterschiedlichen Erfassungsprinzipien mit getrennten Summenstromwandlern verwendet. Die pulsstromsensitive Erfassung ist bei der aus der DE 197 35 412 A1 bekannten Fehlerstrom-Schutzeinrichtung netzspannungsunabhängig realisiert, wohingegen die gleichstromsensitive Erfassung netzspannungsabhängig realisiert ist.

Bei der bekannten Fehlerstrom-Schutzeinrichtung überwachen die erste Sensoreinrichtung und die zweite Sensoreinrichtung über jeweils einen eigenen Summenstromwandler ständig parallel das Leitungsnetz und arbeiten parallel auf eine Auslöseeinrichtung.

Um eine Rückwirkung der ersten Sensoreinrichtung auf das Auslöseverhalten der zweiten Sensoreinrichtung zu vermeiden, ist in der zur Auslöseeinrichtung führenden Steuerleitung eine erste Entkopplungseinrichtung geschaltet.

Bei der allstromsensitiven Fehlerstrom-Schutzeinrichtung gemäß der DE 197 35 412 A1 beeinflussen sich die Auslösezeiten und Auslöseströme gegenseitig nicht, so dass bei einer Kombination der beiden Fehlerstrom-Auslöseschaltungen die charakteristischen Daten für die einzelnen Fehlerstrom-Auslöseschaltungen, d.h. der Nennfehlerstrom und die Auslösezeitverzögerung der ihnen jeweils zugeordneten Fehlerstromarten, auch bei Kombination unverändert bleiben. Damit können die geforderten Auslösefehlerstrom- und Auslösezeitgrenzen bei Wechselfehlerstrom, pulsierendem Gleichfehlerstrom und glattem Gleichfehlerstrom entsprechend den Vorschriften (VDE, ÖVE, EN, IEC) eingehalten werden.

Die aus der DE 197 35 412 A1 bekannte Fehlerstrom-Schutzreinrichtung weist jedoch aufgrund ihres Aufbaus (2 Summenstromwandler, bis zu 2 Entkopplungseinrichtungen) ein relativ großes Bauvolumen und damit einen entsprechenden Energieverbrauch sowie eine entsprechende Wärmeabstrahlung auf.

Die WO 86/06222 A1 beschreibt eine Fehlerstrom-Schutzeinrichtung mit einer ersten, netzspannungsunabhängigen Sensoreinrichtung zum Erfassen von Wechselfehlerstrom und einer zweiten, netzspannungsabhängigen Sensoreinrichtung zum Erfassen von ausschließlich Gleichfehlerstrom, wobei beide Sensoreinrichtungen gemeinsam mit einem Summenstromwandler gekoppelt sind. Bei einer Ausführungsform umfasst der Summenstromwandler sowohl eine Sekundärspule zur Kopplung mit der ersten Sensoreinrichtung und eine Tertiärspule zur Kopplung mit der zweiten Sensoreinrichtung. Bei einer anderen Ausführungsform umfasst der Summenstromwandler eine Spule, die mit beiden Sensoreinrichtungen gekoppelt ist.

Aus der EP 0 866 536 A3 ist ein Fehlerstromschutzschalter für Allstrom bekannt, bei welchem ein einzelner Summenstromwandler gleichzeitig als Pulsstromwandler für einen Pulsstromsignalzweig und als Gleichstromsignalgeber für einen Gleichstromsignalzweig dient. Die beiden Signalzweige umfassen jeweils einen Sensor zur Erfassung von Fehlerströmen, wobei im Pulsstromsignalzweig eine Entkoppelungseinrichtung in Form einer Bandsperre vorgesehen ist, welche den Pulsstromsignalzweig im Bereich der gesperrten Frequenzen vom Summenstromwandler entkoppelt.

Aufgabe der vorliegenden Erfindung ist es, eine Fehlerstrom-Schutzreinrichtung der eingangs genannten Art zu schaffen, die einfacher aufgebaut ist und eine geringere Baugröße aufweist.

Die Aufgabe wird erfindungsgemäß durch eine allstromsensitive Fehlerstrom-Schutzreinrichtung mit den Merkmalen des Anspruchs 1 gelöst. Vorteilhafte Ausgestaltungen der erfindungsgemäßen Fehlerstrom-Schutzreinrichtung sind jeweils Gegenstand von weiteren Ansprüchen.

Die allstromsensitive Fehlerstrom-Schutzeinrichtung gemäß Anspruch 1 umfasst eine erste, netzspannungsunabhängige Sensoreinrichtung für Wechselfehlerstrom und pulsierenden Gleichfehlerstrom sowie eine zweite, netzspannungsabhängige Sensoreinrichtung für glatten Gleichfehlerstrom, Wechselfehlerstrom und pulsierenden Gleichfehlerstrom, wobei die erste Sensoreinrichtung und die zweite Sensoreinrichtung parallel zueinander an eine Steuerleitung einer Auslöseeinrichtung angeschlossen sind. Die erfindungsgemäße Fehlerstrom-Schutzeinrichtung weist weiterhin einen Summenstromwandler auf, dessen Wicklung die Sekundärwicklung für die erste Sensoreinrichtung und die Steuerwicklung für die zweite Sensoreinrichtung bildet, wobei die Wicklung über eine Entkopplungseinrichtung entweder an die erste Sensoreinrichtung oder an die zweite Sensoreinrichtung angebunden ist und über einen Messwiderstand auf Bezugspotential geführt ist.

Anstelle von zwei Summenstromwandlern weist die erfindungsgemäße Fehlerstrom-Schutzeinrichtung einen gemeinsamen Summenstromwandler für die erste Sensoreinrichtung und für die zweite Sensoreinrichtung auf. Damit wird gegenüber der bekannten Fehlerstrom-Schutzreinrichtung ein Summenstromwandler eingespart.

Aufgrund der Entkopplungseinrichtung tritt keine gegenseitige Beeinflussung der ersten Sensoreinrichtung (netzspannungsunabhängige FI-Erfassung) und der zweiten Sensoreinrichtung (netzspannungsabhängigen DI-Erfassung) auf. Damit können beide Sensoreinrichtungen jeweils für sich getrennt betrachtet und entsprechend den Erfordernissen dimensioniert werden.

Trotz des einfacheren Aufbaus können damit durch die erfindungsgemäße Fehlerstrom-Schutzeinrichtung die geforderten Auslösefehlerstrom- und Auslösezeitgrenzen bei Wechselfehlerstrom, pulsierendem Gleichfehlerstrom und glattem Gleichfehlerstrom entsprechend den Vorschriften (VDE, ÖVE, EN, IEC) eingehalten werden.

Gemäß einer vorteilhaften Ausgestaltung der Erfindung ist die Entkopplungseinrichtung als netzspannungsunabhängiger Filter ausgeführt, das hinsichtlich seiner Sperreigenschaften auf die Frequenz des durch die Wicklung des Summenstromwandlers fließenden Steuerstromes abgestimmt ist. Besonders vorteilhaft ist es hierbei, als Entkopplungsfilter einen passiven Tiefpassfilter vorzusehen, dessen Grenzfrequenz auf die Frequenz des durch die Wicklung fließenden Steuerstromes abgestimmt ist. Vorzugsweise liegt die Grenzfrequenz deutlich höher als die Netzfrequenz. Eine derartige Ausführungsform zeichnet sich durch einen einfachen konstruktiven Aufbau und durch hohe Zuverlässigkeit aus.

Es ist möglich, dass die Wicklung des Summenstromwandlers aus zwei getrennten Wicklungen besteht, wobei die eine Wicklung für die erste Sensoreinrichtung und die andere Wicklung für die zweite Sensoreinrichtung vorgesehen ist.

Es kann eine Selbstüberwachungseinrichtung vorgesehen sein, durch die im Fehlerfall die Auslöseeinrichtung betätigbar ist.

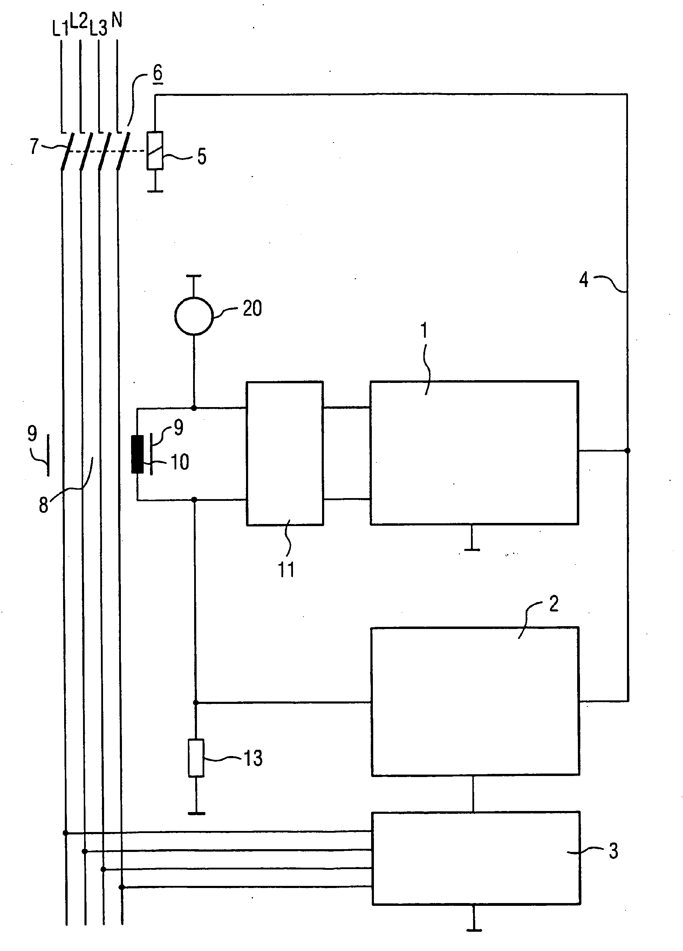

Ein Ausführungsbeispiel der Erfindung wird nachfolgend anhand der Zeichnung näher erläutert.

Die in der einzigen Figur dargestellte Ausführungsform der allstromsensitiven Fehlerstrom-Schutzeinrichtung umfasst eine erste, netzspannungsunabhängige Sensoreinrichtung 1 sowie eine zweite, netzspannungsabhängige Sensoreinrichtung 2, die von einem Netzteil 3 mit Spannung versorgt wird. Die erste Sensoreinrichtung 1 ist für die Erfassung von Wechselfehlerströmen und pulsierenden Gleichfehlerströmen ausgelegt. Die zweite Sensoreinrichtung 2 dient zur Erfassung von glatten Gleichfehlerströmen, und optional zur Erfassung von Wechselfehlerströmen und pulsierenden Gleichfehlerströmen.

Die Fehlerstrom-Schutzeinrichtung weist weiterhin einen Summenstromwandler 8 auf, der zur Überwachung eines mehrphasigen Netzes mit den Außenleitern L1, L2, L3 und dem Nullleiter N dient. Der Summenstromwandler 8 weist einen Kern 9 auf, der eine Wicklung 10 trägt. Die Wicklung 10 bildet die Sekundärwicklung für die erste Sensoreinrichtung 1. Die Primärwicklungen werden hierbei von den Außenleitern L1, L2 und L3 und dem Nulleiter N gebildet. Die Wicklung 10 bildet weiterhin die Steuerwicklung für die zweite Sensoreinrichtung 2.

Um eine gegenseitige Beeinflussung der beiden Sensoreinrichtungen 1 und 2 zuverlässig zu vermeiden, ist zwischen die Wicklung 10 und die Sensoreinrichtung 1 eine Entkopplungseinrichtung 11 geschaltet.

Die Wicklung 10 des Summenstromwandlers 8 ist außerdem an eine Wechselspannungsquelle 20 geführt. Weiterhin ist die Wicklung 10 über einen Messwiderstand 13 auf Bezugspotential geführt.

Im dargestellten Ausführungsbeispiel ist die Entkopplungseinrichtung 11 als netzspannungsunabhängiges Filter ausgeführt.

Das netzspannungsunabhängige Filter 11 ist hinsichtlich seiner Sperreigenschaften auf die Frequenz des durch die Wicklung 10 des Summenstromwandlers 8 fließenden Steuerstromes abgestimmt. Besonders vorteilhaft ist es hierbei, dass das Entkopplungsfilter 11 als passiver Tiefpassfilter ausgebildet ist, dessen Grenzfrequenz auf die Frequenz des durch die Wicklung 10 fließenden Steuerstromes abgestimmt ist. Vorzugsweise liegt die Grenzfrequenz des passiven Tiefpassfilters 11 deutlich höher als die Netzfrequenz. Bei einer Netzfrequenz von 50 Hz beträgt die Grenzfrequenz des Tiefpassfilters 11 beispielsweise 1000 Hz. Das Tiefpassfilter 11 sperrt damit bei 1000 Hz, so dass der von der Wechselspannungsquelle 20 erzeugte Strom nur durch den Summenstromwandler 8 fließt.

Im dargestellten Ausführungsbeispiel besteht der netzspannungsabhängige Teil (DI-Teil) der allstromsensitiven Fehlerstromschutzeinrichtung aus der Wechselspannungsquelle 20, dem Summenstromwandler 8, dem Messwiderstand 13, der zweiten, netzspannungsabhängigen Sensoreinrichtung 2 und der Auslöseeinrichtung 6. Der netzspannungsabhängige Teil der allstromsensitiven Fehlerstromschutzeinrichtung arbeitet nach dem bekannten Prinzip der gesteuerten Induktivität.

Die Reihenschaltung von Wicklung 10 des Summenstromwandlers 8 und von dem Messwiderstand 13 wird von der Wechselspannungsquelle 20 gespeist,' deren Frequenz deutlich höher liegt (z.B. 1000 Hz) als die Netzfrequenz (z.B. 50 Hz). Das Entkopplungsfilter 11 (passiver Tiefpassfilter) sperrt bei 1000 Hz, so dass der von der Wechselspannungsquelle 20 erzeugte Strom nur durch die Wicklung 10 des Summenstromwandlers 8 fließt.

Der netzspannungsunabhängige Teil der allstromsensitiven Fehlerstromeinrichtung besteht bei der dargestellten Ausführungsform aus dem Summenstromwandler 8, der ersten, netzspannungsunabhängigen Sensoreinrichtung 1, und der Auslöseeinrichtung 6.

Die im Summenstromwandler 8 von Wechselfehlerströmen und pulsierenden Gleichfehlerströmen induzierte niederfrequente Spannung (Netzfrequenz und Oberschwingungen) wird vom Entkopplungsfilter 11 (passiver Tiefpassfilter) auf die erste, netzspannungsunabhängige Sensoreinrichtung 1 durchgelassen.

Aufgrund des Entkopplungsfilters 11 tritt keine gegenseitige Beeinflussung der ersten Sensoreinrichtung 1 (netzspannungsunabhängige FI-Erfassung) und der zweiten Sensoreinrichtung 2 (netzspannungsabhängigen DI-Erfassung)auf. Damit können beide Sensoreinrichtungen 1 und 2 jeweils für sich getrennt betrachtet und entsprechend den Erfordernissen dimensioniert werden.

Weiterhin wird der Spannungsabfall am Messwiderstand 13 in der zweiten Sensoreinrichtung 2 ausgewertet. Beim Vorliegen eines Auslösekriteriums wirkt die zweite Sensoreinrichtung 2 auf das Relais 5 der Auslöseeinrichtung 6, wodurch der Schaltmechanismus 7 geöffnet wird. durch die Auswertung des Spannungsabfalls am Messwiderstand 13 können durch die zweite Sensoreinrichtung 2 nicht nur glatte Gleichfehlerströme, sondern auch darüber hinaus auch Wechselfehlerströme und pulsierende Gleichfehlerströme erfasst werden.

Dies ist jedoch nicht zwingend notwendig, weil die beiden Sensoreinrichtungen immer gleichzeitig aktiv sind und somit die Erfassung der pulsierenden Gleichfehlerströme und der Wechselströme durch die Sensoreinrichtung 1 erfolgt.

Die allstromsensitive Auslegung der Sensoreinrichtung 2 stellt eine Redundanz zur pulsstromsensitiven Sensoreinrichtungen 1 dar.

## Patentansprüche

1. Allstromsensitive Fehlerstrom-Schutzeinrichtung mit
- einer ersten, netzspannungsunabhängigen Sensoreinrichtung (1) für Wechselfehlerstrom und pulsierenden Gleichfehlerstrom und mit
- einer zweiten, netzspannungsabhängigen Sensoreinrichtung (2) für glatten Gleichfehlerstrom, Wechselfehlerstrom und pulsierenden Gleichfehlerstrom,
wobei
- die erste Sensoreinrichtung (1) und die zweite Sensoreinrichtung (2) parallel zueinander an eine Steuerleitung (4) einer Auslöseeinrichtung (6) angeschlossen sind, und dass
- die Fehlerstrom-Schutzeinrichtung einen Summenstromwandler (8)umfasst, dessen Wicklung (10) die Sekundärwicklung für die erste Sensoreinrichtung (1) und die Steuerwicklung für die zweite Sensoreinrichtung (2) bildet, wobei
- zwischen die Wicklung (10) und die erste Sensoreinrichtung (1) eine Entkopplungseinrichtung (11) geschaltet ist, und
- die Wicklung (10) über einen Messwiderstand (13) auf Bezugspotential geführt ist,
**dadurch gekennzeichnet, dass**
durch eine Selbstüberwachungseinrichtung im Fehlerfall die Auslöseeinrichtung (6) betätigbar ist.

2. Fehlerstrom-Schutzeinrichtung nach Anspruch 1, wobei
- die Entkopplungseinrichtung (11) als netzspannungsunabhängiger Entkopplungsfilter ausgeführt ist, das hinsichtlich seiner Sperreigenschaften auf die Frequenz des durch die Wicklung (10) des Summenstromwandlers (8) fließenden Steuerstromes abgestimmt ist, und wobei
- die Wicklung (10) an eine Wechselspannungsquelle (20) geführt ist.

3. Fehlerstrom-Schutzeinrichtung nach Anspruch 2, wobei
- das Entkopplungsfilter (11) als passiver Tiefpassfilter ausgeführt ist, dessen Grenzfrequenz auf die Frequenz des durch die Wicklung (10) fließenden Steuerstromes abgestimmt ist.

4. Fehlerstrom-Schutzeinrichtung nach Anspruch 3, wobei
- die Grenzfrequenz des Tiefpassfilters (11) deutlich höher liegt als die Netzfrequenz.

5. Fehlerstrom-Schutzeinrichtung nach Anspruch 1, wobei
- die Wicklung (10) des Summenstromwandlers (8) aus zwei getrennten Wicklungen besteht, wobei die eine Wicklung für die erste Sensoreinrichtung (1) und die andere Wicklung für die zweite Sensoreinrichtung (2) vorgesehen ist.

## Claims

1. All fault current sensitive protective device with
- a first, ac mains voltage-independent sensor device (1) for alternating fault current and pulsing direct fault current and with
- a second, ac mains voltage-independent sensor device (2) for smooth direct fault current, alternating fault current and pulsing direct fault current,
with
- the first sensor device (1) and the second sensor device (2) being connected in parallel to each other to a control line (4) of a tripping device (6) and that
- the fault current sensitive protective device comprises a summation current converter (8) of which the winding (10) forms the secondary winding for the first sensor device (1) and the control winding for the second sensor device (2), with
- a decoupling device (11) being connected between the winding (10) and the first sensor device (1), and
- the winding (10) being connected via a measurement resistor (13) to reference potential,
**characterised in that**
the tripping device (6) is able to be actuated in the event of a fault by a self-supervision device.

2. Fault current sensitive protective device according to claim 1, with
- the decoupling device (11) being embodied as an ac mains voltage-independent decoupling filter, which is matched in respect of its blocking characteristics to the frequency of the control current flowing through the winding (10) of the summation current converter (8), and with
- the winding (10) being connected to an ac voltage source (20).

3. Fault current sensitive protective device according to claim 2, with
- the decoupling filter (11) being embodied as a passive lowpass filter of which the limiting frequency is matched to the frequency of the control current flowing through the winding (10).

4. Fault current-sensitive protective device according to claim 3, with
- the limit frequency of the lowpass filter (11) being much higher than the ac mains frequency.

5. Fault current-sensitive protective device according to claim 1, with
- the winding (10) of the summation current converter (8) consisting of two separate windings, with the one winding being provided for the first sensor device (1) and the other winding being provided for the second sensor device (2).

## Revendications

1. Dispositif de protection contre le courant de défaut, sensible à tous les courants, comprenant
- un premier dispositif capteur (1) indépendant de la tension de réseau pour du courant de défaut alternatif et du courant de défaut continu pulsatoire et
- un second dispositif capteur (2) indépendant de la tension de réseau pour du courant de défaut continu lisse, du courant de défaut alternatif et du courant de défaut continu pulsatoire,
- le premier dispositif capteur (1) et le second dispositif capteur (2) étant raccordés parallèlement entre eux à une ligne de commande (4) d'un dispositif de déclenchement (6), et
- le dispositif de protection contre le courant de défaut comportant un convertisseur de courant cumulé (8), dont l'enroulement (10) forme l'enroulement secondaire pour le premier dispositif capteur (1) et l'enroulement de commande pour le second dispositif capteur (2),
- un dispositif de découplage (11) étant branché entre l'enroulement (10) et le premier dispositif capteur (1), et
- l'enroulement (10) étant connecté par une résistance de mesure (13) sur le potentiel de référence,
**caractérisé en ce que**
le dispositif de déclenchement (6) peut être actionné par un dispositif d'autocontrôle en cas de défaut.

2. Dispositif de protection contre le courant de défaut selon la revendication 1,
- le dispositif de découplage (11) étant réalisé sous forme de filtre de découplage indépendant de la tension de réseau, qui, en ce qui concerne ses propriétés de blocage, est adapté à la fréquence du courant de commande passant dans l'enroulement (10) du convertisseur de courant cumulé (8), et
- l'enroulement (10) étant connecté sur une source de tension alternative (20).

3. Dispositif de protection contre le courant de défaut selon la revendication 2,
- le filtre de découplage (11) étant réalisé sous forme de filtre passe-bas passif, dont la fréquence limite est adaptée à la fréquence du courant de commande passant dans l'enroulement (10).

4. Dispositif de protection contre le courant de défaut selon la revendication 3,
- la fréquence limite du filtre passe-bas (11) étant nettement supérieure à la fréquence de réseau.

5. Dispositif de protection contre le courant de défaut selon la revendication 1,
- l'enroulement (10) du convertisseur de courant cumulé (8) étant constitué de deux enroulements séparés, l'un des enroulements étant prévu pour le premier dispositif capteur (1) et l'autre enroulement pour le second dispositif capteur (2).
